# EUROPÄISCHE PATENTSCHRIFT

(11) **EP 2 783 082 B1**
(45) Veröffentlichungstag und Bekanntmachung des Hinweises auf die Patenterteilung: **08.02.2017**
(21) Anmeldenummer: 12787449.3
(22) Anmeldetag: 19.11.2012
(51) Int. Cl.: F01N 3/20, F02M 53/04, F01N 11/00, B05B 9/00

(54) **DOSIERMODUL MIT LUFTSPALTISOLIERUNG**
DOSING DEVICE WITH INSULATION MEANS PROVIDED WITH AN AIR GAP
MODULE DE DOSAGE AVEC STRUCTURE D'ISOLATION COMPRENNANT UN ENTREFER

(30) Priorität: 22.11.2011 DE 102011086798
(43) Veröffentlichungstag der Anmeldung: 01.10.2014
(73) Patentinhaber: Robert Bosch GmbH, 70442 Stuttgart (DE)
(72) Erfinder: KIONTKE, Martin, 71254 Ditzingen (DE); POHL, Stephan, 71701 Schwieberdingen (DE); KNITTEL, Achim, 71254 Ditzingen (DE)
(86) Internationale Anmeldenummer: PCT/EP2012/072949
(87) Internationale Veröffentlichungsnummer: WO 2013/076028

(56) Entgegenhaltungen:
- WO-A1-2013/068288
- DE-A1-102009 047 375
- JP-A- 9 096 212
- JP-A- 2010 031 769

## Beschreibung

### Stand der Technik

DE 44 36 397 B4 bezieht sich auf eine Einrichtung zum Nachbehandeln von Abgasen. Die Einrichtung umfasst ein Abgassammelsystem, in dem ein Reduktionskatalysator zur Reduktion von NOₓ-Bestandteilen des Abgases der Brennkraftmaschine angeordnet ist. Die Einrichtung umfasst ferner eine Dosiereinrichtung, umfassend ein elektrisch gesteuertes Dosierventil zum dosierten Einbringen eines Reduktionsmittels in den Strom des dem Katalysator zugeführten Abgases, abhängig von einem im Kennfeld gespeicherten Wert des NOₓ-Gehaltes im Abgas bei verschiedenen Betriebsparametern der Brennkraftmaschine sowie des Katalysators. Das Ventil zur Steuerung der Luftzufuhr ist ein elektrisch gesteuertes Steuerventil, das stromabwärts der Austrittsöffnung des Dosierventils angeordnet ist und dessen Austrittsöffnung unmittelbar in den Abgasstrom der Brennkraftmaschine mündet. Das Steuerventil ist von einem Körper aufgenommen, der von einem Kühlmedium umströmbar ist, so dass das Steuerventil gekühlt ist.

US 2008 0236147 A1 offenbart ein Einspritzsystem, welches im Rahmen der selektiven katalytischen Reduktion an einem Kraftfahrzeug zur Reduktion von NOₓ-Anteilen im Abgas eingesetzt wird. Gemäß dieser Lösung umfasst das Einspritzsystem einen Injektor, der über einen elektrischen Anschluss mit Strom versorgt wird. Innerhalb des elektrischen Anschlusses befindet sich ein elektrischer Kontakt, der zur Aufnahme eines Steckers einer Anschlussleitung konfiguriert ist.

US 2010 0108020 A1 hat ein Anschlusssystem für elektrische Leitungen zum Gegenstand, die in gefährlichen Bereichen, so z.B. einem Bereich, in dem Explosionsgefahr herrscht, wie z.B. der Umgebung einer Verbrennungskraftmaschine, verlegt sind. Das offenbarte Anschlusssystem eignet sich zum elektrischen Anschluss von Leitungen verschiedener Sensoren und Komponenten. Das Anschlusssystem umfasste eine Gummitülle sowie eine Kappe, die mit einem Innengewinde versehen ist. Dabei dient die Gummitülle als elektrischer und thermischer Isolator und wird im montierten Zustand des Anschlusssystems komprimiert.

DE 10 2009 060 065 A1 offenbart eine Fluidleitung für Harnstoff-Wasser-Lösungen in NOₓ-Reduktionseinrichtungen, die gemäß der selektiven katalytischen Reduktion arbeiten (SCR). Die Fluidleitung ist aus einem thermischen Vulkanisat (TPV) hergestellt. Das thermische Vulkanisat weist gummiartige Eigenschaften auf und ist auch unter der Bezeichnung "Thermoplastik-Elastomer" bekannt. Das thermische Vulkanisat zeichnet sich insbesondere durch eine hohe Beständigkeit gegenüber aggressiven Flüssigkeiten aus und weist eine sehr hohe Flexibilität sowie eine hervorragende Biegsamkeit auf. Eine aus thermischem Vulkanisat gefertigte Fluidleitung gemäß DE 10 2009 060 065 A1 wird zum Verbinden von Tanks, Pumpen, Einspritzdüsen oder zur Aufnahme von Kupplungen eingesetzt.

WO 2013/068288 A1, welche Stand der Technik nach Artikel 54 (3) EPÜ darstellt, bezieht sich auf ein Dosiermodul. Das Dosiermodul dient dem Eindüsen eines Reduktionsmittels, insbesondere einer Harnstoff-Wasserlösung, in ein Abgasrohr einer Brennkraftmaschine, insbesondere einer selbstzündenden Brennkraftmaschine zur Verminderung von Stickoxiden im Abgasstrom. Das Dosiermodul weist einen Basiskühlkörper auf, der von einem Kühlfluid, insbesondere zum Kühlen eines Einspritzventils für das Reduktionsmittel durchströmt ist. Im Basiskühlkörper ist ein Leiteinsatz für eine Kühlfluid angeordnet. Infolge des Leiteinsatzes erfolgt eine vorrangige Kühlung des Endabschnittes des Einspritzventiles, welcher in unmittelbarem Kontakt mit dem heißen Abgasstrom der Brennkraftmaschine steht.

JP 9 096 212 A bezieht sich auf einen Abgasreiniger für Dieselmotoren. Ein Abgasreiniger eines Dieselmotors mit einem NOₓ-Katalysator befindet sich im Abgasstrang eines Motors. Es wird ein Injektor eingesetzt zum Einbringen von NOₓ-reduzierenden Mitteln, der sich stromauf des NOₓ-Katalysators befindet. Der Injektor weist Kühlwasserkanäle und Zirkulationspassagen auf, über welche ein Kühlwasserkreislauf mit dem Motorkühlkreislauf verbunden ist.

### Darstellung der Erfindung

Der Erfindung liegt die Aufgabe zugrunde, ein Dosiermodul für ein Abgasnachbehandlungssystem bereitzustellen, welches den im Betrieb einer Verbrennungskraftmaschine auftretenden hohen thermischen Belastungen widersteht.

Erfindungsgemäß wird vorgeschlagen, in einem Dosiermodul zu dessen Schutz vor Überhitzung eine Wand dieses Bauteil mit einer Isolationsschale zu umgeben und/oder eine Wasserkühlung zu realisieren. Bei Einsatz einer Isolationsschale lässt sich beispielsweise eine Luftspaltisolierung realisieren, die insbesondere im Steckerbereich bzw. im Bereich der Spule des Ventils vor Überhitzungsschäden schützt.

Der erfindungsgemäß vorgeschlagenen Lösung folgend, ist das Dosierelement von einem Kühlkörper umschlossen, der - mehrere Teile umfassend - das Dosierventil zum Einbringen eines Betriebs-/Hilfsstoffes, insbesondere eines Reduktionsmittels in den Abgastrakt einer Verbrennungskraftmaschine, komplett umschließt. Demnach stellt der Kühlkörper in Bezug auf das Dosierelement dessen Einhausung dar. In einer bevorzugten Ausführungsvariante der erfindungsgemäß vorgeschlagenen Lösung, ist der die Einhausung des Dosierventils darstellende Kühlkörper mehrteilig ausgebildet und umfasst beispielsweise eine Oberschale, eine Mittelschale sowie eine aus einem elastische Eigenschaften aufweisenden Material gefertigte, beispielsweise als Kunststofftülle oder Gummitülle ausgebildete Steckkontaktabdeckung. Des Weiteren umfasst die Einhausung des Dosiermoduls eine Unterschale, welche sich unterhalb der Mittelschale befindet, wobei in die Unterschale des die Einhausung des Dosiermoduls darstellenden Kühlkörpers ein topfförmiger Einsatz eingelassen ist.

Während die Oberschale des insbesondere mehrteilig ausgebildeten Kühlkörpers einen Reduktionsmittelzulauf und ansonsten Hohlräume umfasst, die nicht von einem Kühlfluid durchströmt sind, sondern Luftspaltisolierungen darstellen, umfasst die unterhalb der Oberschale angeordnete Mittelschale sowohl Hohlräume, die von dem Kühlfluid durchströmt sind, als auch Hohlräume, welche lediglich mit Luft befüllt sind und somit Luftspaltabschnitte einer Luftspaltisolierung eines elektrischen Steckkontaktes darstellen.

Die Unterschale, die den topfförmigen Einsatz aufnimmt, ist mit einem Hohlraum versehen, der von Kühlfluid durchströmt ist. Die Zirkulation des Kühlfluids im topfförmigen Einsatz der Unterschale bzw. durch die Teile der Mittelschale, die von Kühlflüssigkeit durchströmt sind, erfolgt durch einen Kühlfluidzulauf, der an der Unterschale aufgenommen ist sowie über einen Kühlfluidrücklauf, der sich an der Mantelfläche der Mittelschale befindet. Zwischen dem topfförmigen Einsatz, der in der Unterschale aufgenommen ist, und dem Boden der oberhalb dieser angeordneten Mittelschale befinden sich Durchgangsöffnungen, die ein Überströmen von Kühlfluid, von dem Hohlraum der Unterschale in den Hohlraum der Oberschale ermöglichen.

Der erfindungsgemäß vorgeschlagenen Lösung folgend, stellt die Mittelschale gewissermaßen ein "Hybridbauteil" dar, welches einerseits in Bezug auf die durch diese verlaufende elektrische Steckkontaktierung eine Luftspaltisolierung ermöglicht, andererseits jedoch Bereiche aufweist, die von dem Kühlfluid durchströmt sind. In erfindungsgemäß vorgeschlagener Weise sind die Bereiche, die das Kühlfluid führen, von den Bereichen, welche die Luftspaltisolierung des elektrischen Kontaktes darstellen, voneinander getrennt, wobei die Anzahl der erforderlichen Dichtstellen auf ein Minimum reduziert ist. Zur Trennung der die Luftspaltisolierung darstellenden Luftspaltabschnitte in der Mittelschale von den in der Mittelschale ausgebildeten Hohlräumen, die das Kühlfluid führen, ist in vorteilhafter Weise eine sich geneigt durch die Mittelschale verlaufende Trennrippe zu nennen, welche die Luftspaltabschnitte der Luftspaltisolierung von dem Hohlraum der Mittelschale trennt, der das Kühlfluid führt.

### Vorteile der Erfindung

Der erfindungsgemäß vorgeschlagenen Lösung folgend, kann nicht nur der Bereich des Dosiermoduls, der im Bereich einer Austrittsöffnung des Betriebs-/Hilfsstoffes, insbesondere des Reduktionsmittels liegt, mit einem Kühlfluid gekühlt werden, sondern es können weitere Bereiche des Dosiermoduls gekühlt werden, was mit Hilfe der Luftspaltisolation erreicht wird. In besonders vorteilhafter Weise kann die Luftspaltisolierung des elektrischen Kontaktes zur Ansteuerung des Dosiermoduls in dem Bereich, insbesondere in der Mittelschale des eine Einhausung des Dosierventils darstellenden mehrteiligen Kühlkörpers erfolgen, da die elektrische Kontaktierung von einer Kunststoffabdeckung umschlossen ist, die aus einem Material gefertigt ist, welches elastische Eigenschaften aufweist. Aufgrund der elastischen Eigenschaften der Kunststoffabdeckung können unterschiedliche Ausdehnungskoeffizienten, von aus metallischem Material gefertigten Bereichen des Kühlkörpers und von aus Kunststoffmaterial gefertigten Teilen des Kühlkörpers kompensiert werden. Einerseits lässt sich die beispielsweise als Kunststofftülle oder Gummitülle ausgebildete Steckkontaktabdeckung mittels eines Rastverschlusses an der Oberschale und in einer gegenüberliegend an diesem Bauteil ausgebildeten Verrastung an der Mittelschale lösbar befestigen. Durch die Kunststoffabdeckung, die an der Oberschale und an der Mittelschale des die Einhausung darstellenden mehrteiligen Kühlkörpers lösbar befestigt werden kann, kann die Luftspaltisolierung wirksam verschlossen werden, wobei jedoch gleichzeitig durch Verzicht auf eine Schweißverbindung Relativbewegungen ohne Einbuße an Abdichtwirkung zugelassen werden können.

Die erfindungsgemäß vorgeschlagene Lösung berücksichtigt montagetechnische Vereinfachungen dadurch, dass im oberen Bereich die Kühlung durch Konvektion, d.h. im Wege der Luftspaltisolation beigeführt wird, während im unteren Bereich des Dosiermoduls eine Flüssigkeitskühlung verwirklicht werden kann, so dass der erfindungsgemäß vorgeschlagenen Lösung folgend die gesamte Kühlung des Dosiermoduls erreicht werden kann.

Durch den Einsatz der wassergekühlten Mittelschale wird zudem die thermische Masse, dies bedeutet die Wärmespeicherkapazität, im oberen Bereich des Dosiermoduls erhöht. Dadurch ist es möglich, auch dann ein verzögertes Aufheizen des Ventils zu erreichen, wenn die Kühlfluidzirkulation unterbrochen ist. Kurzzeitige Temperaturspitzen führen somit auch ohne aktive Kühlfluidzirkulation nicht zur Beschädigung des Dosiermoduls.

Die erfindungsgemäß vorgeschlagene Einhausung des Dosiermoduls stellt des Weiteren einen Schutz des Dosierventils vor einem Temperaturschock bei einer schlagartigen Abkühlung dar. Eine solche Abkühlung kann beispielsweise bei einer Motorreinigung bei heißem Motor oder einer Wasserdurchfahrt auftreten. Ein Temperaturschock wird vermieden, da zuerst der Kühlkörper mit seiner großen thermischen Masse abgekühlt wird. Das vom Kühlkörper umschlossene Dosierventil kühlt dadurch langsamer ab, wodurch Spannungen im Bauteil aufgrund von unterschiedlichen Wärmeausdehnungskoeffizienten vermieden werden.

### Kurze Beschreibung der Zeichnungen

Anhand der Zeichnung wird die Erfindung nachstehend eingehender beschrieben.

Es zeigt:
- Figur 1: eine perspektivische Wiedergabe des Dosiermodules, dessen Dosierventil von einem eine Einhausung darstellenden, mehrteiligen Kühlkörper umschlossen ist,
- Figur 2: einen Querschnitt durch das in Figur 1 dargestellte Dosiermodul und dessen mehrteiligen Kühlkörper und
- Figuren 3.1 bzw. 3.2: perspektivische Ansichten der Steckkontaktabdeckung.

### Ausführungsvarianten

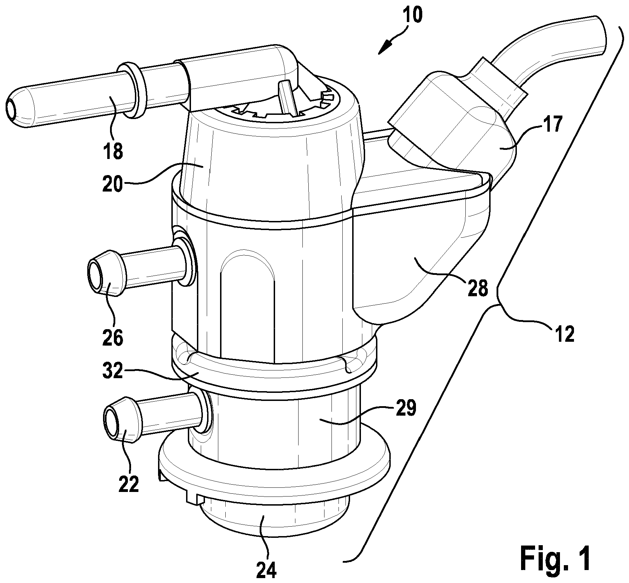

Bei dem nachfolgend, anhand der Figuren 1 bis 3.2 beschriebenen Dosiermodul handelt es sich um ein Dosiermodul zum Einbringen eines Betriebs-/Hilfsstoffes, insbesondere eines Reduktionsmittels, wie beispielsweise Harnstoff oder eine Harnstoff-Wasser-Lösung, in den Abgastrakt einer Verbrennungskraftmaschine. In Einbauumgebung des erfindungsgemäß vorgeschlagenen Dosiermodules 10 herrschen Temperaturen im Bereich zwischen 100°C und 160°C. Es können je nach Einsatzzweck und Einbauort auch höhere oder tiefere Temperaturniveaus vorliegen. Durch den Betriebs-/Hilfsstoff, insbesondere ein Reduktionsmittel, wie beispielsweise Harnstoff oder eine Harnstoff-Wasser-Lösung, werden die NOₓ-Bestandteile, die im Abgas von Verbrennungskraftmaschinen vorhanden sind, zu H₂O und N₂ reduziert. Die erfindungsgemäß vorgeschlagene Vorrichtung zur Kühlung eines Dosiermodules 10 kann auch bei anderen Dosiervorrichtungen, die innerhalb eines bestimmten Temperaturbereiches zu betreiben sind, als Kühlung für diese eingesetzt werden.

Der Darstellung gemäß Figur 1 ist zu entnehmen, dass ein Dosierventil eines Dosiermoduls 10 von einer vollständigen Einhausung 12, welche gewissermaßen ein zweites Gehäuse darstellt, umschlossen ist. Die vollständige Einhausung 12 umfasst eine Oberschale 20, die beispielsweise in Form einer Kappe ausgebildet sein kann, eine Kunststoffabdeckung 17, die insbesondere aus einem elastische Eigenschaften aufweisenden Material, wie beispielsweise einem Kunststoffmaterial oder einem Gummi gefertigt sein kann. Des Weiteren umfasst die Einhausung 12 eine Mittelschale 28, ferner eine unterhalb dieser angeordnete Führungshülse 32 sowie eine darunter liegende Unterschale 29, in die - in Figur 1 nur teilweise dargestellt - ein topfförmiger Einsatz 24 eingelassen ist.

Wie aus der perspektivischen Darstellung gemäß Figur 1 hervorgeht, ist das Dosierventil des Dosiermoduls 10 gänzlich von den oben stehend aufgezählten Komponenten 17, 20, 28, 29 umschlossen. Lediglich ein unteres Ende des topfförmigen Einsatzes 24 ragt unterhalb der Unterschale 29 der vollständigen Einhausung 12 des Dosiermodules 10 hervor.

Wie aus der perspektivischen Darstellung gemäß Figur 1 des Weiteren hervorgeht, befindet sich ein Kühlfluidzulauf 22 in der Mantelfläche der Unterschale 29. Demgegenüber befindet sich in der Mantelfläche der Mittelschale 28 ein Kühlfluidrücklauf 26.

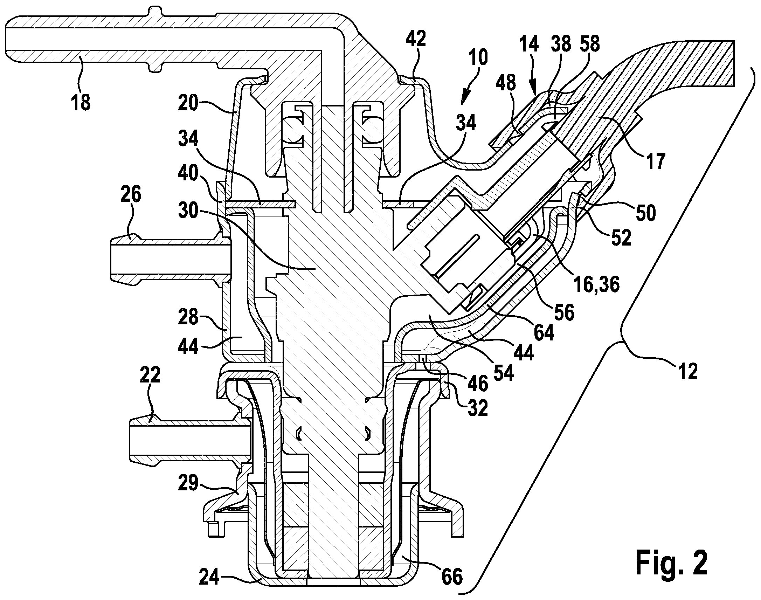

Der Darstellung gemäß Figur 2 ist ein Schnitt durch die mehrteilige Ausführung des Kühlkörpers des Dosiermodules gemäß Figur 1 zu entnehmen.

Der Querschnitt gemäß Figur 2 zeigt, dass das gesamte Dosierventil 30 von der vollständigen Einhausung 12 umgeben ist. Die vollständige Einhausung 12 umfasst dabei die Oberschale 20. Durch die Oberschale 20 erstreckt sich der Betriebs-/Hilfsstoffzulauf 18, über welche insbesondere ein Reduktionsmittel, wie beispielsweise Harnstoff oder eine Harnstoff-Wasser-Lösung, dem Dosiermodul 10 zugeführt wird. Figur 2 zeigt, dass dieser Zulauf 18 gewinkelt ausgebildet ist und mit einem Flansch, eine obere Stirnseite des Dosierventils 30 überdeckend, durch die Oberschale 20 gekapselt ist. Die Oberschale 20 ihrerseits umfasst einen Hohlraum 42, der von dem Kühlfluid durch eine durch Bezugszeichen 64 bezeichnete Trennrippe 64 gegen die Mittelschale 28, deren Hohlraum 44 von dem Kühlfluid durchströmbar ist, getrennt ist. Wie der Schnittdarstellung gemäß Figur 2 des Weiteren entnommen werden kann, umfasst die Oberschale 20 im Bereich eines Steckers 16 bzw. eines elektrischen Steckkontaktes 36 einen Luftspaltabschnitt 58, der Teil einer Luftspaltisolierung 14 des elektrischen Steckkontaktes 16 bzw. 36 des Dosiermoduls 10 ist.

Unterhalb der Oberschale 20, die Teil der vollständigen Einhausung 12 des Dosiermodules ist, befindet sich eine Mittelschale, die durch Bezugszeichen 28 gekennzeichnet ist. Die Mittelschale 28 umfasst eine Aufnahme 40, in welche die den nicht von Kühlfluid durchströmten Hohlraum 42 umfassende Oberschale 20 eingelassen ist.

Die Mittelschale 28 umgibt ebenfalls das Dosierventil 30, welches über eine Haltescheibe 34 an der Mittelschale 28 aufgenommen wird. Die Mittelschale 28 sitzt auf einer Führungshülse 32 auf. Die Führungshülse 32 ihrerseits ist auf einem im Wesentlichen topfförmig ausgebildeten Einsatz 24 aufgenommen.

Der Schnittdarstellung gemäß Figur 2 ist zu entnehmen, dass die Mittelschale 28 den Hohlraum 44 umfasst, der von dem Kühlfluid durchströmt wird und gleichzeitig auch einen ersten Luftspaltabschnitt 54 sowie einen zweiten Luftspaltabschnitt 56 enthält. Der erste Luftspaltabschnitt 54 und der zweite Luftspaltabschnitt 56 sind durch eine Trennrippe 64, die in der Mittelschale 28 ausgebildet ist, von dem Hohlraum 44 getrennt. Insbesondere ist der Verlauf der Trennrippe 64 in der Mittelschale 28 derart gewählt, dass sich der erste Luftspaltabschnitt 54 und der sich daran anschließende zweite Luftspaltabschnitt 56 entlang des elektrischen Steckkontaktes 36 in Richtung auf die Steckkontaktabdeckung 17 hin erstrecken. Die Trennrippe 64, welche den ersten Luftspaltabschnitt 54 und den zweiten Luftspaltabschnitt 56 gegen den von dem Kühlfluid durchströmten Hohlraum 44 abtrennen, mündet an einem Wandende 52 der Mittelschale 28. Dort befindet sich auch ein Verrastungsanschluss 50, ebenso wie auf der gegenüberliegenden Seite der Oberschale, vergleiche Position 48 in Figur 2. An den beiden Verrastungsstellen 48 bzw. 50, die einerseits an der Oberschale 20 und andererseits an der Mittelschale 28 ausgebildet sind, ist die Kunststoffabdeckung lösbar verrastet. Wie bereits in Zusammenhang mit Figur 1 erläutert, ist die Kunststoffabdeckung 17 mit einer Verrastung 58 an der Oberschale 20 und mit einer dieser gegenüberliegenden Verrastung 50 an der Außenseite der Mittelschale 28 befestigt. Aufgrund der Geometrie der Steckerabdeckung 17 erstrecken sich die deren Öffnung 62 begrenzenden Rastanschlüsse 50 bzw. 52 derart über die entsprechenden Aufnahmebereiche der Oberschale 20 und der Mittelschale 28, dass durch Temperaturunterschiede bedingte Dehnungen aufgrund der elastischen Eigenschaften des Materials der Steckerabdeckung 17 kompensiert werden können. Dadurch können Leckagen vermieden werden, die sich beispielsweise dann einstellen, wenn Materialien, die unterschiedliche Wärmeausdehnungskoeffizienten aufweisen, unterschiedliche bei Relativbewegungen der Teile zueinander auftretende Dehnungen kompensieren.

Durch die erfindungsgemäß vorgeschlagene Lösung ist einerseits eine Leckage von Kühlfluid nach außen unterbunden, andererseits ist gewährleistet, dass das Kühlfluid von der elektrischen Steckkontaktierung 36 ferngehalten wird, so dass kein elektrischer Kurzschluss in diesem Bereich auftreten kann. Im Bereich der elektrischen Kontaktierung 36 wird die Kühlung auf erfindungsgemäß vorgeschlagene Weise durch die Luftspaltisolierung 14 an den Luftspaltabschnitten 38, 54 und 56, wie in Figur 2 dargestellt, realisiert.

Aus der Darstellung gemäß Figur 2 geht hervor, dass die Mittelschale 28 ein "Hybridbauteil" darstellt, welches sowohl eine Luftspaltisolierung im Bereich des elektrischen Steckkontaktes 36 realisiert und andererseits mindestens einen Hohlraum 44 aufweist, der von Kühlfluid durchströmt ist.

Wie dem unteren Bereich der Darstellung gemäß Figur 2 entnommen werden kann, befindet sich unterhalb der Führungshülse 32 die Unterschale 29. Die Unterschale 29 ihrerseits nimmt den mit Bezugszeichen 24 bezeichneten topfförmigen Einsatz auf.

Am unteren Ende des Dosiermodules 10 können Temperaturen in der Größenordnung von 120°C und mehr auftreten. Aus diesem Grunde liegt im Bereich der Unterschale 29 der Kühlfluidzulauf 22, in den das Kühlfluid in die Unterschale 29 und von dort in einen Hohlraum 66 des topfförmigen Einsatzes 24 überströmt. Im unteren Bereich des Dosierventils 30 befindet sich auch die Einspritzdüse, über die ein Sprühnebel aus Betriebs-/Hilfsstoff und Luft in den Abgastrakt der Verbrennungskraftmaschine eingespritzt wird.

Da hier betriebsbedingt die Höchsttemperaturen auftreten, liegt der Kühlfluidzulauf 22 zur Optimierung der Kühlwirkung in diesem Teil des erfindungsgemäß vorgeschlagenen Dosiermodules 10, um im Bereich der dort auftretenden hohen Temperaturen eine optimale Wärmeabfuhr zu gewährleisten.

Aus der Schnittdarstellung gemäß Figur 2 geht des Weiteren hervor, dass nach Eintritt des Kühlfluides durch den Kühlfluidzulauf 22 nach Durchströmen des Hohlraumes 66 des topfförmigen Einsatzes 24 das Kühlfluid über Durchgangsöffnungen 46 dem Hohlraum 44 oberhalb des Bodens der Mittelschale 28 zuströmt. Wie Figur 2 zeigt, fluchten Durchgangsöffnungen 46 in der Führungshülse 32 und im Boden der Mittelschale 28 zueinander, so dass das Kühlfluid nach Durchströmen des topfförmigen Einsatzes 24 in den Hohlraum 44 der Mittelschale 28 übertritt. Nach Passage des Hohlraumes 44 der Mittelschale 28, der durch die Trennrippe 64 von den Luftspaltabschnitten 54, 56 flüssigkeitsdicht getrennt ist, verlässt das nach Umströmen des Dosiermodules 10 durch dessen Abwärme erwärmte Kühlfluid den Hohlraum 44 der Mittelschale 28 am Kühlfluidrücklauf 26, wie in Figur 2 dargestellt.

Die Durchgangsöffnungen 46 stellen einen Übertritt des Kühlfluids vom Hohlraum 66 des topfförmigen Einsatzes 24 in den mindestens einen Hohlraum 44 der Mittelschale 28 der Einhausung 2 sicher. Wie dem montierten Zustand gemäß Figur 2 entnommen werden kann, ermöglicht die vorzugsweise aus einem elastische Eigenschaften aufweisenden Material gefertigte Steckerabdeckung 17 die Darstellung einer Luftspaltisolierung, d.h. eine Kühlung aufgrund Konvektion im Bereich der elektrischen Steckkontaktierung 36 im oberen Teil des Dosiermodules 10. Andererseits besteht die Möglichkeit an weiteren Komponenten, insbesondere dem hohen thermischen Belastungen ausgesetzten Einspritzteil des Dosierventils 30 eine Wasserkühlung vorzusehen, durch welche ein sehr guter Abtransport der Wärme realisiert werden kann. Die erfindungsgemäß vorgeschlagene Lösung realisiert die Kühlung aller Komponenten eines Dosiermodules 10. Durch die erfindungsgemäß vorgeschlagene Lösung lassen sich insbesondere Materialien jeweils auf ihren Einsatzzweck optimiert einsetzen, ohne dass deren möglicherweise unterschiedlichen Wärmeausdehnungskoeffizienten zu Leckagen oder Ermüdungsrissen führen.

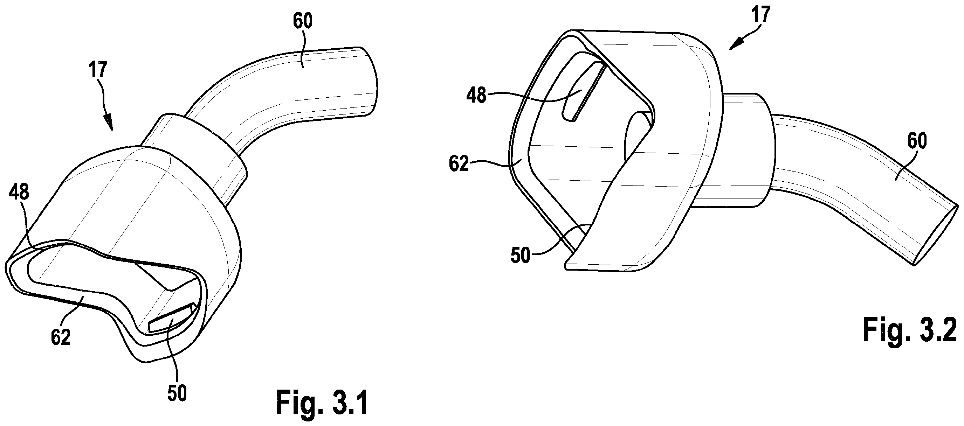

Den Figuren 3.1 und 3.2 sind perspektivische Ansichten der Steckerabdeckung wie in Figur 1 und Figur 2 im Querschnitt dargestellt, zu entnehmen.

Figur 3.1 zeigt, dass die Steckerabdeckung 17 einen Kabelabgang 60 umschließt und eine Öffnung 62 aufweist. Die Öffnung 62 wird durch einander gegenüberliegend ausgebildete Verrastungen 48, 50 begrenzt, die komplementär zu deren Geometrie ausgebildete Vertiefungen bzw. Erhebungen an der Oberschale 20 bzw. im Steckerbereich der Mittelschale 28 ausgebildet sein können. Figur 3.2 zeigt, dass die Öffnung 62 der Kunststoffabdeckung 17 beispielsweise quadratisch oder auch rechteckig ausgebildet werden kann, was günstig hinsichtlich der Ausbildung der Verrastungsanschlüsse 48, 50 ist. Liegen diese einander gegenüber, kann bei Verrastung der Steckerabdeckung 17 und der Erzeugung einer Vorspannung eine zuverlässig abdichtende, jedoch auch wieder lösbare Befestigung der Kunststoffabdeckung 17 an Oberschale 20 und Mittelschale 28 des die Einhausung 12 darstellenden, mehrteilig ausgebildeten Kühlkörpers erreicht werden.

## Patentansprüche

1. Vorrichtung zur Kühlung eines Dosiermoduls (10), insbesondere zum Eindosieren eines Betriebs-/Hilfsstoffes in den Abgastrakt einer Verbrennungskraftmaschine, wobei dem Dosiermodul (10) eine Kühleinrichtung zugeordnet ist, die einen Kühlkörper (17, 20, 24, 28, 29) umfasst, der von einer Kühlflüssigkeit durchströmt ist, wobei der Kühlkörper (17, 20, 24, 28, 29) eine Einhausung (12) des Dosierventils (30) bildet, deren ersten Gruppe von Teilen (17, 20, 28) eine Luftspaltisolierung (38; 54, 56, 58) an einem elektrischen Kontakt (16, 56) bildet und dessen zweite Gruppe von Teilen (28, 29, 40) von Kühlfluid durchströmt ist, **dadurch gekennzeichnet, dass** der Kühlkörper eine Oberschale (20), eine verrastbare Steckkontaktabdeckung (17), eine Mittelschale (28), eine Unterschale (29) und einen in die Unterschale (29) eingelassenen topfförmigen Einsatz (24) umfasst, und dass die Steckkontaktabdeckung (17) zum Ausgleich von temperaturbedingten Dehnungen von Oberschale (20) und Mittelschale (28) aus elastische Eigenschaften aufweisendem Material gefertigt ist.

2. Vorrichtung gemäß Anspruch 1, **dadurch gekennzeichnet, dass** die Oberschale (20) von der zumindest bereichsweise von Kühlfluid durchströmten Mittelschale (28) mediendicht getrennt ist.

3. Vorrichtung gemäß einem der vorhergehenden Ansprüche, **dadurch gekennzeichnet, dass** die Mittelschale (28) einen Kühlfluid führenden Hohlraum (44) aufweist und dass die Oberschale (20) mit der verrastbaren Steckkontaktabdeckung (17) einen Luftspaltabschnitt (58) der Luftspaltisolierung (14) bildet.

4. Vorrichtung gemäß einem der vorhergehenden Ansprüche, **dadurch gekennzeichnet, dass** die Mittelschale (28) einen von Kühlfluid durchströmten Hohlraum (44) aufweist und von diesem getrennte erste und zweite Luftspaltabschnitte (54, 56) der Luftspaltisolierung (38) umfasst.

5. Vorrichtung gemäß dem vorhergehenden Anspruch, **dadurch gekennzeichnet, dass** die Mittelschale (28) einen vom Hohlraum (44) ausgehenden Kühlfluidrücklauf (26) umfasst.

6. Vorrichtung gemäß einem der vorhergehenden Ansprüche, **dadurch gekennzeichnet, dass** die Mittelschale (28) eine Trennrippe (64) enthält, die den Hohlraum (44) von dem ersten und zweiten Luftspaltabschnitt (54, 56) trennt.

7. Vorrichtung gemäß einem der vorhergehenden Ansprüche, **dadurch gekennzeichnet, dass** zwischen der Mittelschale (28) und dem in die Unterschale (29) eingelassenen topfförmigen Einsatz (24) eine Führungshülse (32) aufgenommen ist.

8. Vorrichtung gemäß Anspruch 7, **dadurch gekennzeichnet, dass** in der Führungshülse (32) und einem Boden der Mittelschale (28) Durchgangsöffnungen (46) vorgesehen sind, die ein Überströmen von Kühlfluid aus einem Hohlraum (66) des topfförmigen Einsatzes (24) in den Hohlraum (44) der Mittelschale (28) ermöglichen.

9. Vorrichtung gemäß einem der vorhergehenden Ansprüche, **dadurch gekennzeichnet, dass** ein Kühlfluidzulauf (22) in die Unterschale (29) mündet, die einen Kühlfluid führende Unterschalenhohlraum (66) enthält.

10. Vorrichtung gemäß Anspruch 1, **dadurch gekennzeichnet, dass** die Steckkontaktabdeckung (17) eine erste Verrastung (48) an der Oberschale (20) und eine weitere zweite Verrastung (50) an der Mittelschale (28) des Hohlkörpers (17, 20, 24, 28, 29) umfasst.

## Claims

1. Apparatus for cooling a metering module (10), in particular for metering a fuel/additive into the exhaust section of an internal combustion engine, wherein the metering module (10) is assigned a cooling device which comprises a heat sink (17, 20, 24, 28, 29) through which a cooling liquid flows, wherein the heat sink (17, 20, 24, 28, 29) forms a housing (12) of the metering valve (30), the first group of parts (17, 20, 28) of which housing forms an air gap insulation (38; 54, 56, 58) on an electric contact (16, 56) and the second group of parts (28, 29, 40) of which contact has cooling fluid flowing therethrough, **characterized in that** the heat sink comprises an upper shell (20), a latchable plug-in contact cover (17), a central shell (28), a lower shell (29) and a cup-shaped insert (24) embedded in the lower shell (29), and **in that** the plug-in contact cover (17) is manufactured from material having elastic properties in order to compensate for temperature-induced expansions of upper shell (20) and central shell (28).

2. Apparatus according to Claim 1, **characterized in that** the upper shell (20) is separated in a mediatight manner from the central shell (28) through which cooling fluid flows at least in some regions.

3. Apparatus according to either of the preceding claims, **characterized in that** the upper shell (20) has a cavity (44) conducting cooling fluid, and **in that** the upper shell (20) forms an air gap portion (58) of the air gap insulation (14) together with the latchable plug-in contact cover (17).

4. Apparatus according to one of the preceding claims, **characterized in that** the central shell (28) has a cavity (44) through which cooling fluid flows, and comprises first and second air gap portions (54, 56) of the air gap insulation (38), said air gap portions being separated from said cavity.

5. Apparatus according to the preceding claim, **characterized in that** the central shell (28) comprises a cooling fluid return (26) emerging from the cavity (44).

6. Apparatus according to one of the preceding claims, **characterized in that** the central shell (28) contains a separating rib (64) which separates the cavity (44) from the first and second air gap sections (54, 56).

7. Apparatus according to one of the preceding claims, **characterized in that** a guide sleeve (32) is accommodated between the central shell (28) and the cup-shaped insert (24) embedded in the lower shell (29).

8. Apparatus according to Claim 7, **characterized in that** passage openings (46) which permit cooling fluid to flow from a cavity (66) of the cup-shaped insert (24) into the cavity (44) of the central shell (28) are provided in the guide sleeve (32) and in a base of the central shell (28).

9. Apparatus according to one of the preceding claims, **characterized in that** a cooling fluid inlet (22) leads into the lower shell (29) which contains a lower shell cavity (66) conducting cooling fluid.

10. Apparatus according to Claim 1, **characterized in that** the plug-in contact cover (17) comprises a first latching means (48) on the upper shell (20) and a further, second latching means (50) on the central shell (28) of the hollow body (17, 20, 24, 28, 29).

## Revendications

1. Dispositif de refroidissement d'un module de dosage (10), en particulier pour le dosage d'un carburant/additif dans la ligne des gaz d'échappement d'un moteur à combustion interne, dans lequel un dispositif de refroidissement est associé au module de dosage (10) et comprend un corps de refroidissement (17, 20, 24, 28, 29), qui est parcouru par un liquide de refroidissement, dans lequel le corps de refroidissement (17, 20, 24, 28, 29) forme un boîtier (12) de la soupape de dosage (30), dont un premier groupe de pièces (17, 20, 28) forme une isolation par film d'air (38; 54, 56, 58) sur un contact électrique (16, 56) et le deuxième groupe de pièces (28, 29, 40) du contact électrique est parcouru par un fluide de refroidissement, **caractérisé en ce que** le corps de refroidissement comprend une coque supérieure (20), un protège-contact enfichable à déclic (17), un coque moyenne (28), une coque inférieure (29) et un insert en forme de godet (24) introduit dans la coque inférieure (29), et **en ce que** le protège-contact enfichable (17) est fabriqué en un matériau présentant des propriétés élastiques pour compenser les allongements dus à la température de la coque supérieure (20) et de la coque moyenne (28).

2. Dispositif selon la revendication 1, **caractérisé en ce que** la coque supérieure (20) est séparée de façon étanche au fluide de la coque moyenne (28) parcourue au moins localement par un fluide de refroidissement.

3. Dispositif selon l'une quelconque des revendications précédentes, **caractérisé en ce que** la coque moyenne (28) présente une cavité (44) conduisant du fluide de refroidissement et **en ce que** la coque supérieure (20) forme avec le protège-contact enfichable à déclic (17) une partie du film d'air (58) de l'isolation par film d'air (14).

4. Dispositif selon l'une quelconque des revendications précédentes, **caractérisé en ce que** la coque moyenne (28) présente une cavité (44) parcourue par un fluide de refroidissement et comprend des première et deuxièmes parties (54, 56) de l'isolation par film d'air (38) séparées de celle-ci.

5. Dispositif selon la revendication précédente, **caractérisé en ce que** la coque moyenne (28) comprend un retour de fluide de refroidissement (26) partant de la cavité (44).

6. Dispositif selon l'une quelconque des revendications précédentes, **caractérisé en ce que** la coque moyenne (28) comporte une nervure de séparation (64), qui sépare la cavité (44) de la première et de la deuxième parties de film d'air (54, 56).

7. Dispositif selon l'une quelconque des revendications précédentes, **caractérisé en ce qu'**une douille de guidage (32) est placée entre la coque moyenne (28) et l'insert en forme de godet (24) introduit dans la coque inférieure (29).

8. Dispositif selon la revendication 7, **caractérisé en ce qu'**il est prévu dans la douille de guidage (32) et un fond de la coque moyenne (28) des ouvertures de passage (46), qui permettent un débordement de fluide de refroidissement d'une cavité (66) de l'insert en forme de godet (24) dans la cavité (44) de la coque moyenne (28).

9. Dispositif selon l'une quelconque des revendications précédentes, **caractérisé en ce qu'**une arrivée de fluide de refroidissement (22) débouche dans la coque inférieure (29), qui contient une cavité de coque inférieure (66) conduisant du fluide de refroidissement.

10. Dispositif selon la revendication 1, **caractérisé en ce que** le protège-contact enfichable (17) comprend un premier encliquetage (48) sur la coque supérieure (20) et un deuxième encliquetage (50) sur la coque moyenne (28) du corps creux (17, 20, 24, 28, 29).
